# EUROPÄISCHE PATENTSCHRIFT

(11) **EP 1 957 297 B1**
(45) Veröffentlichungstag und Bekanntmachung des Hinweises auf die Patenterteilung: **02.11.2011**
(21) Anmeldenummer: 06827950.4
(22) Anmeldetag: 30.11.2006
(51) Int. Cl.: B60G 3/28, B60G 11/06, B60G 21/05

(54) **UNABHÄNGIGE RADAUFHÄNGUNG FÜR KRAFTFAHRZEUGE**
INDEPENDENT WHEEL SUSPENSION FOR MOTOR VEHICLES
SUSPENSION DE ROUE INDEPENDANTE POUR VEHICULES AUTOMOBILES

(30) Priorität: 30.11.2005 AT 8162005
(43) Veröffentlichungstag der Anmeldung: 20.08.2008
(73) Patentinhaber: Magna Steyr Fahrzeugtechnik AG & Co. KG, 8041 Graz (AT)
(72) Erfinder: MICHELITSCH, Martin, A-8062 Kumberg (AT)
(74) Vertreter: Schupp, Bernhard
(86) Internationale Anmeldenummer: PCT/AT2006/000497
(87) Internationale Veröffentlichungsnummer: WO 2007/062448

(56) Entgegenhaltungen:
- DE-A1- 3 139 805
- FR-A- 503 579
- FR-A- 636 380
- GB-A- 310 391
- JP-A- 4 159 110
- JP-A- 4 252 712
- JP-A- 7 309 112
- JP-A- 9 076 715
- US-A- 1 864 247
- US-A1- 2002 000 703

## Beschreibung

Die Erfindung betrifft eine unabhängige Radaufhängung für die Räder einer Achse eines Kraftfahrzeuges, die für jedes der Räder besteht aus: einem Längslenker, der einerseits gelenkig mit dem Kraftfahrzeug beziehungsweise mit einem Fahrschemel oder Hilfsrahmen verbunden und andererseits mit einem Radträger fest verbunden ist, einem Querlenker, der einerseits gelenkig mit dem Kraftfahrzeug und andererseits gelenkig mit dem Radträger verbunden ist, und aus einer weiteren Verbindung zwischen Radträger/Längslenker und dem Kraftfahrzeug, deren Anlenkpunkt am Radträger/Längslenker bezüglich des Anlenkpunktes des Querlenkers versetzt ist.

Es kann sich um eine Vorderachse oder eine Hinterachse, angetrieben oder nicht angetrieben, handeln. Im Folgenden werden für die Richtungsachsen die im Kraftfahrzeugbau üblichen Bezeichnungen verwendet: x-Achse = Längsachse, y-Achse = Querachse, z-Achse = Höhenachse. Entsprechend werden die Begriffe x-Richtung, y-Richtung und z-Richtung gebraucht.

Eine gattungsgemäße Radaufhängung ist zum Beispiel aus der Patentschrift GB 310 391 bekannt. Sie besteht aus einem oberen Querlenker, einer mittig eingespannten Blattfeder als unteren Querlenker und einem Längslenker zur Aufnahme von Längskräften. Die Anlenkpunkte am Radträger können elastische Elemente oder Kugelgelenke sein. Sie sind übereinander (somit mit gleicher x-Koordinate) angeordnet, sodass die Vorspur unveränderlich ist. Zur Verbesserung der Kurvengängigkeit ist aber eine sich in Abhängigkeit von der Einfederung einstellende Vorspur erwünscht. Außerdem wäre es von Vorteil, wenn dieses "Eigenlenkverhalten" bei einseitigem Einfedern (Neigung bei Kurvenfahrt) stärker ist.
Aus der US 2002/0000703 A1 und der JP 07 309 112 A sind weiterer relevanten Radaufhängungen für die Räder einer Achse eines Kraftfahrzeuges bekannt.

Üblicherweise werden Radaufhängungen mit von der Einfederung abhängig veränderlicher Vorspur als sogenannte Raumlenkerachsen ausgeführt, die eine große Anzahl beweglicher Teile haben und deren Kinematik unübersichtlich ist. Sie sind teuer und brauchen viel Bauraum, auch für die zugehörigen Federn und Stabilisatoren.

Es ist daher Aufgabe der Erfindung, eine möglichst einfache und billige Radaufhängung zu schaffen, die die oben genannten Nachteile vermeidet und trotzdem eine von der Einfederung abhängige Verstellung von Vorspur (und auch Sturz) bietet, kurzum, die bei allen Fahrzuständen optimales Fahrverhalten sichert.

Erfindungsgemäß wird das dadurch erreicht, dass die weitere Verbindung eine im Wesentlichen ungefähr in Fahrzeugquerrichtung angeordnete Blattfeder ist, deren ein Ende am Kraftfahrzeug fest eingespannt und deren anderes Ende gelenkig mit dem Radträger/Längslenker verbunden ist. und dass der Anlenkpunkt der Blattfeder am Radträger/Längslenker (beide sind ja fest miteinander verbunden) näher dem Anlenkpunkt des Längslenkers am Fahrzeug liegt als der Anlenkpunkt des Querlenkers.

Durch die einerseits feste und andererseits gelenkige, aber in Fahrzeugquerrichtung unverschiebbare, Anbindung ist die Blattfeder zugleich ein weiterer Querlenker und das Federelement, sodass keine sperrige Schraubenfeder mehr erforderlich ist. Zudem hat eine mit einem Ende fest eingespannte und gekrümmte Blattfeder den Vorteil, dass sich ihr anderes Ende nicht auf einem Kreisbogen bewegt, weil sich die wirksame Länge der Blattfeder bei abnehmender Krümmung vergrößert.

Dank der in z-Richtung gegeneinander versetzten Anlenkpunkte des Querlenkers und der Blattfeder wird bei entsprechend unterschiedlich gewählten Bahnkurven der Anlenkpunkte deren unterschiedliche Verlagerung in y-Richtung und damit zunächst eine Verstellung des Sturzes in Abhängigkeit von der Einfederung erreicht. Damit wird aber auch eine Verlagerung des Radträgers in y-Richtung erreicht, die wegen der gelenkigen Verbindung des Längslenkers mit dem Fahrzeug die gewünschte Veränderung der Vorspur bewirkt. Dadurch, dass der Anlenkpunkt der Blattfeder an dem Radträger/Längslenker näher dem Anlenkungspunkt des Längslenkers am Fahrzeug zu legen als den Anlenkpunkt des Querlenkers, wird der Einfluss der Blattfeder auf die Änderung der Vorspur beim Einfedern verstärkt. Insgesamt wird so eine Konstruktion mit wenigen billigen Bauteilen und geringem Raumbedarf erreicht, deren Kinematik aber ein von der Einfederung abhängiges Eigenlenkverhalten bewirkt.

Für die Wahl der Anlenkpunkte der Blattfeder und des Querlenkers am Radträger gibt es verschiedene Möglichkeiten: Der Anlenkpunkt der Blattfeder kann in z-Richtung höher oder tiefer als der des Querlenkers, also entweder die Blattfeder unten und der Querlenker oben, oder umgekehrt sein. Die Lage des Anlenkpunktes in y-Richtung ist durch geeignete Gestaltung des Radträgers/Längslenkers auch in gewissen Grenzen wählbar. Weil eine variable Vorspur das Eigenlenkverhalten eines Fahrzeuges beeinflusst, ist bei der Wahl der Anlenkpunkte auch zu berücksichtigen, ob es sich um eine Vorderachse oder Hinterachse handelt, und ob angetrieben oder nicht. Die erfindungsgemäße Achskonstruktion kann unverändert für angetriebene und nicht angetriebene Achsen eingesetzt werden, was für wahlweise mit oder ohne Allradantrieb ausgestattete Fahrzeuge ein großer Vorteil ist.

Vorzugsweise ist der Anlenkpunkt der Blattfeder an dem Radträger/Längslenker tiefer als der Anlenkpunkt des Querlenkers. Das ist kinematisch und raumökonomisch günstiger als umgekehrt. Letzteres, weil sowohl der Querlenker als auch die in der Regel konvex gekrümmte Blattfeder relativ weit oben am Fahrzeug beziehungsweise Hilfsrahmen angelenkt beziehungsweise eingespannt sein können. Dadurch große Bodenfreiheit und die Möglichkeit, im Falle einer angetriebenen Achse das Achsdifferential unterzubringen.

Obwohl die Blattfeder sich durch geringfügige Torsion um ihre Längsachse einem Verschwenken des Längslenkers anpassen kann, ist es vorteilhaft, wenn die um die Querachse verschwenkbare Verbindung des Längslenkers mit dem Kraftfahrzeug und die gelenkige Verbindung zwischen der Blattfeder und dem Radträger/Längslenker begrenzt winkelbewegliche erste elastische Buchsen sind. Die Elastiziät der Buchsen ist nur bezüglich des Winkels erwünscht, nicht bezüglich einer Distanz.

In Weiterbildung der Erfindung ist die Blattfeder länger als die halbe Spurweite der Achse und in der Längsmittenebene des Kraftfahrzeuges mit der Blattfeder des anderen Rades derselben Achse in z-Richtung verbunden (Anspruch 4). Dadurch steht bei gleichsinnigem Einfedern die ganze Länge beider Blattfedern zur Verfügung, bei ungleichsinnigem Einfedern (bei Kurvenfahrt) aber nur der Teil der Blattfeder bis zur Stelle ihrer Verbindung mit der anderen Blattfeder, sodass sie in diesem zweiten Fall kürzer und somit "härter" ist. Damit wird die Wirkung eines Stabilisators erreicht, es ist kein separater Stabilisator nötig.

Diese Stabilisatorwirkung allein ist zwar bereits in der JP 09-076715 A1 beschrieben, jedoch ist dort eine Veränderung der Vorspur weder angestrebt noch erreichbar, weil die Blattfeder mit dem Radträger fest verbunden ist. Bei der vorliegenden Erfindung hingegen ist die Vorspur nicht nur variabel, sondern sie ist es darüber hinaus auch noch in Abhängigkeit von der Art des Einfederns: Bei einseitigem Einfedern (bei Kurvenfahrt) ist der kinematisch wirksame Teil der Blattfeder nur halb so lang, sodass die Änderung der Vorspur stärker ist als bei gleichsinnigem Einfedern.

Besonders praktisch und raumsparend ist das Zusammenwirken der beiden Blattfedern umzusetzen, wenn beide Blattfedern mit der Fahrzeugquerrichtung (y-Richtung) in Draufsicht einen spitzen Winkel einschließen. Dann kreuzen sie sich in der Längsmittenebene des Kraftfahrzeuges und sie und ihre Anbindungen an den Radträger/Längslenker können baugleich sein.

Dadurch ist auch eine besonders einfache Verbindung der beiden Blattfedern in der Längsmittenebene des Kraftfahrzeuges möglich. Sie erfolgt vorzugsweise durch einen Schäkel. Unter einem Schäkel ist ein Ring oder eine Klammer zu verstehen, der/die beiden Blattfedern an der Stelle umfasst und zusammendrückt und zu Montage- und Reparaturzwecken lösbar ist. Der Schäkel braucht ja nur die beiden Blattfedern miteinander zu verbinden, bei gleichsinnigem Einfedern bewegt er sich mit den Blattfedern mit. Die Blattfedern bestehen aus Kunststoff, sie sind am besten als ein einziges Blatt und aus einem geeigneten, meist faserverstärkten Kunststoff ausgeführt.

Im Folgenden wird die Erfindung anhand von Abbildungen beschrieben und erläutert. Es stellen dar:
- Fig. 1: Eine axonometrische Ansicht einer Achse mit der erfindungsgemäßen Radaufhängung,
- Fig. 2: Eine Draufsicht zur Fig. 1,
- Fig. 3: Eine Seitenachsicht zur Fig. 1,
- Fig. 4: Detail IV in Fig. 3, vergrößert,
- Fig. 5: Eine Frontansicht zu Fig. 1 in neutraler Stellung,
- Fig. 6: Wie Fig. 6, in einseitig eingefederter Stellung.

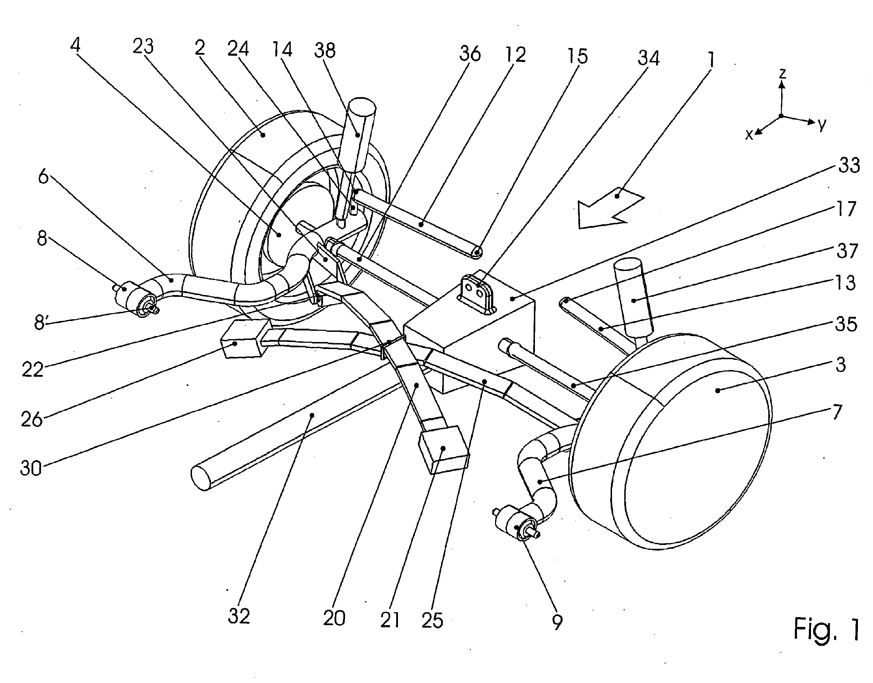

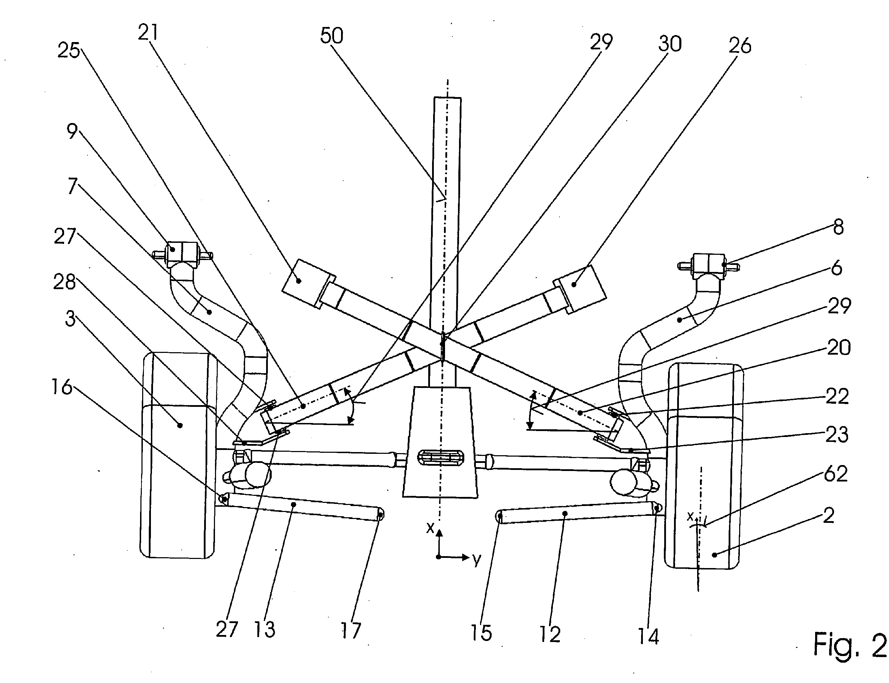

In den **Fig. 1****,** **2****,** **3** handelt es sich um eine Hinterachse, deren Fahrtrichtung mit 1 bezeichnet ist. Das Fahrzeug selbst ist nicht dargestellt. Die Aufhängung des rechten Rades 2 und des linken Rades 3 mit ihren Radträgern 4, 5 ist naturgemäß symmetrisch. Die Radträger 4, 5 sind fest mit einem Längslenker 6 (rechts), 7 (links) verbunden oder einstückig. Die Längslenker 6,7 sind hier Hohlkörper in der Form gebogener Rohre, die in von ersten elastischen Buchsen 8,9 gebildeten Anlenkpunkten schwenkbar am Fahrzeug angelenkt sind. Die ersten elastischen Buchsen lassen eine Verdrehung um Stifte 8' in einer x-z-Ebene und ein geringfügiges Verschwenken der Längslenker 6, 7 in einer x-y-Ebene und - bei der Veränderung des Sturzes - eine Verdrehung in der y-z - Ebene zu. An Stelle der Buchsen könnten auch Kugelgelenke eingesetzt sein. Weiters sind Querlenker 12, 13 vorgesehen. Der rechte Querlenker 12 ist mittels eines Kugelgelenkes in einem Anlenkpunkt 14 am Radträger 4 beziehungsweise am Längslenker 6 angelenkt. Der Anlenkpunkt 14 ist relativ hoch und daher an einem Fortsatz 24 des Längslenkers 6 angeordnet. Das innere Ende des Querlenkers 12 ist ebenfalls mittels eines Kugelgelenkes 15 am nicht dargestellten Fahrzeugkörper angelenkt. Ebenso verhält es sich mit dem linken Querlenker 13, seinem äußeren Anlenkpunkt 16 (Fig. 2) und seinem inneren Anlenkpunkt 17.

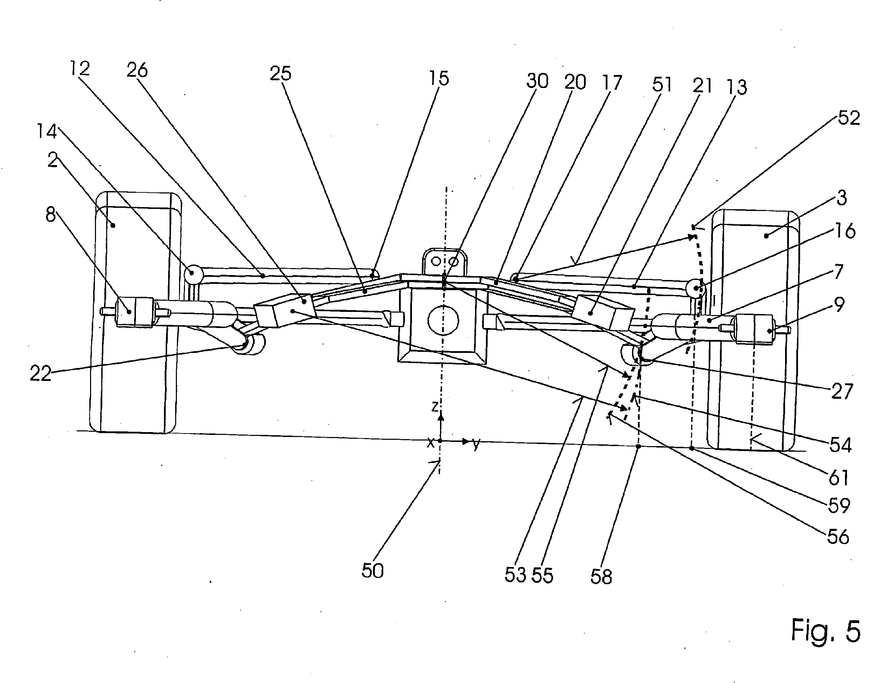

Als weitere Verbindung zwischen dem Fahrzeug und dem Längslenker 6 beziehungsweise Radträger 4 ist eine Blattfeder 20 erfindungsgemäß angeordnet. Sie ist mit einem Ende mittels einer festen Einspannung 21 mit dem Fahrzeug verbunden und mit ihrem anderen Ende mittels einer winkelelastischen zweiten Buchse 22 an einer tiefliegenden Konsole 23 des Längslenkers 6 angelenkt. Die Blattfeder 20 ist länger als die halbe Spurweite der Achse, das heißt, sie reicht über die Längsmittelebene 50 des Fahrzeuges hinaus auf dessen andere Seite bis in die Nähe der elastischen Buchse 9 des Längslenkers 7 auf der anderen Seite des Fahrzeuges. Eine linke Blattfeder 25 ist in einer festen Einspannung 26 mit dem Fahrzeug und mit ihrem anderen Ende über eine zweite elastische Buchse 27 (Fig. 2) und eine Konsole 28 (Fig. 5) mit dem linken Längslenker 7 verbunden.

Die Blattfedern 20,25 sind konvex gekrümmt und von jeweils einem Blatt aus einem geeigneten und gegebenenfalls verstärkten Kunststoff gebildet. Beide Blattfedern 20, 25 sind ungefähr in Fahrzeugquerrichtung angeordnet, vorzugsweise um einen spitzen Winkel 29 (Fig. 2) gegenüber dieser in einer x-y-Ebene nach vorne gerichtet. Dadurch kreuzen sie einander in Draufsicht in der Längsmittelebene. Dort sind sie mit einem Schäkel 30 miteinander verbunden. Diese Verbindung bewirkt, dass sich die Blattfedern 20, 25 bei gleichsinnigem Einfedern der beiden Räder 2, 3 über ihre ganze Länge verformen können, wobei sich die mit dem Schäkel 30 verbundenen Teile der Blattfedern gemeinsam heben und senken können. Federn die beiden Räder 2, 3 jedoch gegensinnig ein, so können sich die Blattfedern 20, 25 nur bis zu dem Schäkel 30 verformen. Es steht somit nur etwas mehr als die halbe Länge der Federn zur Verfügung, sie sind steifer. Dadurch wird die Wirkung eines Stabilisators erzielt.

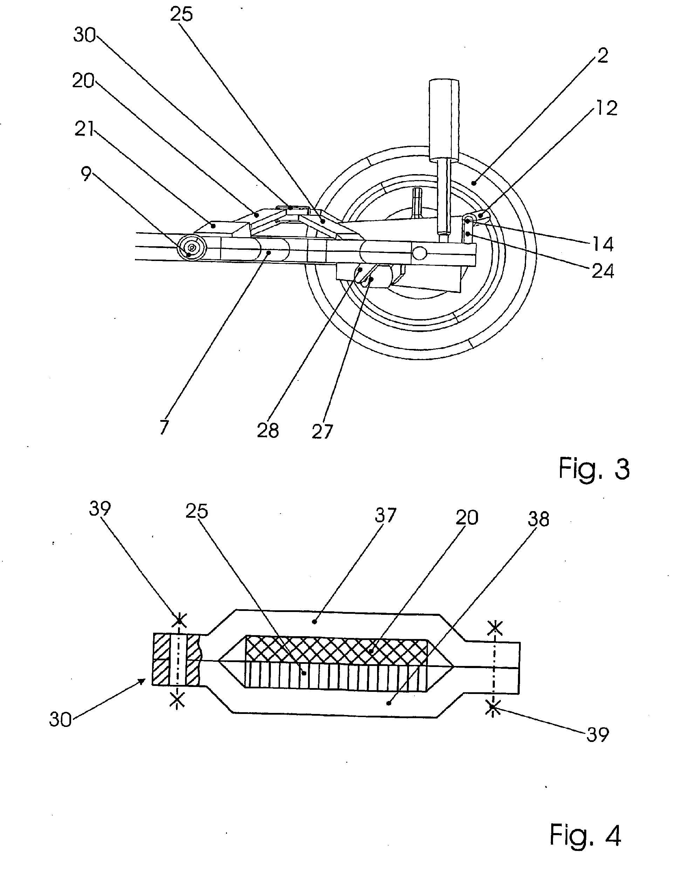

**Fig. 4** zeigt vergrößert den Schäkel 30, um deutlich zu machen, dass dieser nur in der Längsmittelebene die beiden Blattfedern 20, 25 miteinander verbindet. Er besteht aus einem Oberteil 37 und einem Unterteil 38, die mit nur angedeuteten Gewindebolzen 39 zusammengehalten sind.

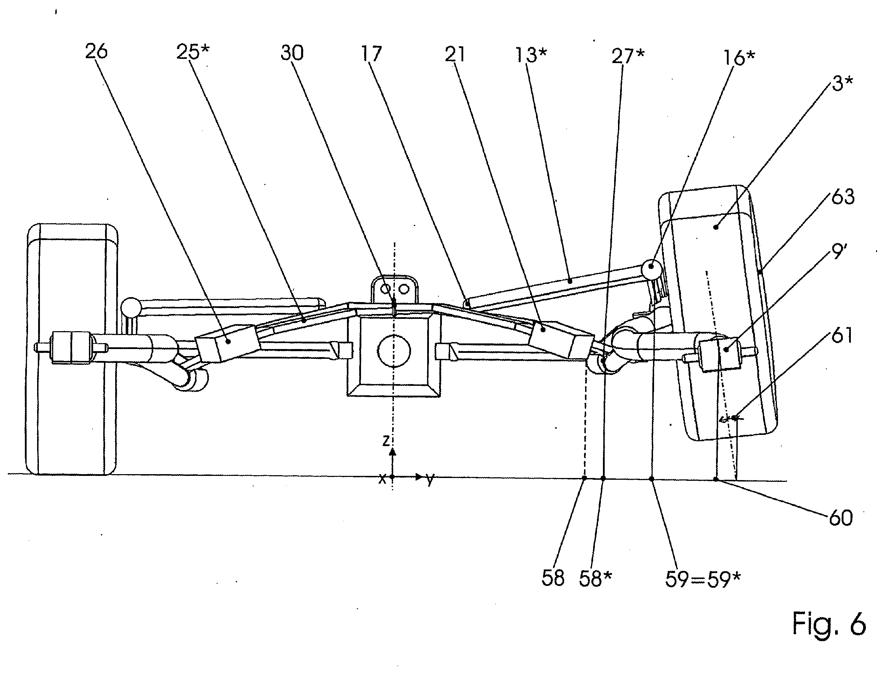

Im Folgenden wird die Kinematik der erfindungsgemäßen Radführung anhand der Fig. 5 und Fig. 6 erläutert. In **Fig. 5** befindet sich die Achse in Grundstellung. Der Anlenkpunkt 16 des Querlenkers 13 hat als Bahnkurve den Kreis 52 mit dem Radius 51 und dem Mittelpunkt 17. Der Anlenkpunkt 27 der Blattfeder 25 beschreibt beim gleichsinnigen Einfedern beider Räder 2, 3 eine Bahnkurve 54, die wegen der Bogenform der Blattfeder 25 kein Kreisbogen ist. Der Krümmungsradius 53 der Bahn 54 hat sein Zentrum ungefähr in der Einspannung 26 der Blattfeder 25. Bei gegensinnigem oder einseitigem Einfedern des Rades 3 beschreibt der Anlenkpunkt 27 der Blattfeder 25 eine Bahn 56 mit dem Krümmungsradius 55, der sein Zentrum ungefähr in der Längsmittenebene 50 des Fahrzeuges hat. Aus den Bahnkurven ist zu erkennen, dass sich beim Einfedern die y-Koordinate der Anlenkpunkte 16, 27, dargestellt durch die Punkte 58, 59 auf der y-Achse ändern. Der Abstand zwischen den Punkten 58 und 59 in y-Richtung bestimmt den Sturz (61 in Fig. 6) des betreffenden Rades 3.

**Fig. 6** zeigt auf der rechten Bildhälfte die Aufhängung des Rades 3 in eingefederter Stellung, was durch einen Stern (*) ausgedrückt ist. Der Anlenkpunkt 16* des Querlenkers 13* hat die y-Koordinate 59*, die sich hier durch das Einfedern nur wenig geändert hat und ungefähr mit dem Punkt 59 zusammenfällt. Der Anlenkpunkt 27* der Blattfeder 25* hat sich in y-Richtung so verlagert, dass seine y-Koordinate vom Punkt 58 zum Punkt 58* gewandert ist. Dadurch hat sich der Sturzwinkel 61 des Rades 3 verändert.

Dank der Kinematik hat sich aber auch die Vorspur (sie ist in Fig. 2 am rechten Rad 2 angedeutet und dort mit 62 bezeichnet) verändert. Das ist in Fig. 6 direkt nur daran erkennbar, dass vom Rad 3* jetzt eine Radseitenfläche als dünner Streifen 63 zu sehen ist. Anhand der auf der y-Achse eingetragenen Punkte ist es aber nachvollziehbar. Durch das Einfedern hat sich der Anlenkpunkt 16* geringfügig von 59 auf 59* und der Anlenkpunkt 27* erheblich von 58 auf 58* nach außen verschoben. Dadurch ist auch das Rad 3* geringfügig nach außen verschoben worden. Da sich die Koordinate 60 des weit davor liegenden Anlenkpunktes des Längsträgers 6 am Fahrzeug in y-Richtung nicht verschoben hat, hat sich die Vorspur des Rades 3* verändert.

## Patentansprüche

1. Unabhängige Radaufhängung für die Räder (2,3) einer Achse eines Kraftfahrzeuges, die für jedes der Räder besteht aus:
a) Einem Längslenker (6,7), der einerseits mit dem Kraftfahrzeug beziehungsweise einem Teil dessen gelenkig verbunden, andererseits mit einem Radträger (4,5) fest verbunden ist,
b) einem Querlenker (12,13), der einerseits gelenkig mit dem Kraftfahrzeug und andererseits gelenkig mit dem Radträger (4,5) verbunden ist,
c) und einer weiteren Verbindung zwischen Radträger/Längslenker (4,5,6,7) und dem Kraftfahrzeug, deren Anlenkpunkt (22,27) am Radträger/Längslenker (4,5,6,7) bezüglich des Anlenkpunktes (14,16) des Querlenkers (12,13) in z - Richtung versetzt ist,
**dadurch gekennzeichnet, dass** die weitere Verbindung eine im Wesentlichen ungefähr in Fahrzeugquerrichtung angeordnete Blattfeder (20,25) ist, deren ein Ende (21,26) am Kraftfahrzeug fest eingespannt und deren anderes Ende an einem Anlenkpunkt (22,27) gelenkig mit dem Radträger/Längslenker verbunden ist, und dass der Anlenkpunkt (22,27) der Blattfeder (20,25) am Radträger/Längslenker (4,5,6,7) näher dem Anlenkpunkt (8,9) des Längslenkers (6,7) am Fahrzeug liegt als der Anlenkpunkt (14,16) des Querlenkers (12,13) und im Anlenkpunkt (8,9) des Längslenkers (6,7) am Kraftfahrzeug und als gelenkige Verbindung zwischen der Blattfeder (20,25) und dem Radträger/Längslenker (4,5,6,7) geringfügig winkelbewegliche elastische Buchsen (8,9,22,27) vorgesehen sind.

2. Unabhängige Radaufhängung nach Anspruch 1, **dadurch gekennzeichnet, dass** der Anlenkpunkt (22,27) der Blattfeder (20,25) am Radträger/Längslenker (4,5,6,7) tiefer als der Anlenkpunkt (14,16) des Querlenkers (12,13) liegt.

3. Unabhängige Radaufhängung nach Anspruch 1, **dadurch gekennzeichnet, dass** die Blattfeder (20,25) eines Rades länger als die halbe Spurweite der Achse und durch die Längsmittenebene hindurch auf die andere Seite des Fahrzeuges reicht und in der Längsmittenebene mit der Blattfeder (25,20) des anderen Rades derselben Achse verbunden ist (30).

4. Unabhängige Radaufhängung nach Anspruch 3, **dadurch gekennzeichnet, dass** die Blattfeder (20, 25) mit der Fahrzeugquerrichtung (y-Richtung) in Draufsicht einen Winkel (29) einschließt.

5. Unabhängige Radaufhängung nach Anspruch 1, **dadurch gekennzeichnet, dass** die Blattfedern (20,25) in der Längsmittenebene des Kraftfahrzeuges durch einen Schäkel (30) miteinander verbunden sind.

6. Unabhängige Radaufhängung nach Anspruch 1, **dadurch gekennzeichnet, dass** die Blattfeder (20,25) aus Kunststoff besteht.

## Claims

1. Independent wheel suspension for the wheels (2, 3) of an axle of a motor vehicle, which for each of the wheels comprises:
a) a trailing arm (6, 7), which on one side is pivotally connected to the motor vehicle or rather to a part thereof and on the other side is fixedly connected to a wheel carrier (4, 5),
b) a control arm (12, 13), which on one side is pivotally connected to the motor vehicle and on the other side is pivotally connected to the wheel carrier (4, 5),
c) and a further connection between the wheel carrier/trailing arm (4, 5, 6, 7) and the motor vehicle, the point of articulation (22, 27) of which on the wheel carrier/trailing arm (4, 5, 6, 7) is offset in the z-direction in relation to the point of articulation (14, 16) of the control arm (12, 13).
**characterized in that** the further connection is a leaf spring (20,25) substantially arranged in an approximately vehicle transverse direction, one end (21, 26) of which spring is fixedly clamped to the motor vehicle and the other end of which is pivotally connected to the wheel carrier/trailing arm at a point of articulation (22, 27), and that the point of articulation (22, 27) of the leaf spring (20, 25) is situated on the wheel carrier/trailing arm (4, 5, 6, 7) closer to the point of articulation (8, 9) of the trailing arm (6, 7) on the vehicle than the point of articulation (14, 16) of the control arm (12, 13) and elastic bushings (8,9,22,27) with slight angular mobility are provided at the point of articulation (8,9) of the trailing arm (6,7) on the motor vehicle and as pivotal connection between the leaf spring (20,25) and the wheel carrier/trailing arm (4,5,6,7).

2. Independent wheel suspension according to Claim 1, **characterized in that** the point of articulation (22,27) of the leaf spring (20,25) on the wheel carrier/trailing arm (4,5,6,7) is lower than the point of articulation (14,16) of the control arm (12,13).

3. Independent wheel suspension according to Claim 1, **characterized in that** the leaf spring (20,25) of a wheel is longer than half the track width of the axle and extends through the longitudinal centre plane to the other side of the vehicle and in the longitudinal centre plane is connected (30) to the leaf spring (25,20) of the other wheel on the same axle.

4. Independent wheel suspension according to Claim 3, **characterized in that** in plan view the leaf spring (20, 25) encloses an angle (29) with the vehicle transverse direction (y-direction).

5. Independent wheel suspension according to Claim 1, **characterized in that** the leaf springs (20,25) are connected together by a shackle (30) in the longitudinal centre plane of the motor vehicle.

6. Independent wheel suspension according to Claim 1, **characterized in that** the leaf spring (20,25) is composed of plastics.

## Revendications

1. Suspension de roue indépendante pour les roues (2, 3) d'un essieu d'un véhicule automobile, qui se compose, pour chacune des roues :
a) d'un bras oscillant longitudinal (6, 7), qui est relié d'un côté au véhicule automobile ou à une partie de celui-ci de manière articulée, et qui est connecté fixement de l'autre côté à un support de roue (4, 5),
b) d'un bras oscillant transversal (12, 13) qui est relié d'un côté au véhicule automobile de manière articulée et qui est connecté de l'autre côté au support de roue (4, 5) de manière articulée,
c) et d'une autre liaison entre le support de roue/le bras oscillant longitudinal (4, 5, 6, 7) et le véhicule automobile, dont le point d'articulation (22, 27) sur le support de roue/le bras oscillant longitudinal (4, 5, 6, 7) est décalé dans la direction z par rapport au point d'articulation (14, 16) du bras oscillant transversal (12, 13),
**caractérisé en ce que** l'autre liaison est un ressort à lame (20, 25) disposé essentiellement approximativement dans la direction transversale du véhicule, dont une extrémité (21, 26) est serrée fixement sur le véhicule automobile, et dont l'autre extrémité est reliée au niveau d'un point d'articulation (22, 27) de manière articulée au support de roue/au bras oscillant longitudinal, et **en ce que** le point d'articulation (22, 27) du ressort à lame (20, 25) sur le support de roue/le bras oscillant longitudinal (4, 5, 6, 7) se situe plus près du point d'articulation (8, 9) du bras oscillant longitudinal (6, 7) sur le véhicule que le point d'articulation (14, 16) du bras oscillant transversal (12, 13), et **en ce que** des douilles élastiques (8, 9, 22, 27) légèrement mobiles angulairement sont prévues dans le point d'articulation (8, 9) du bras oscillant longitudinal (6, 7) sur le véhicule automobile et en tant que liaison articulée entre le ressort à lame (20, 25) et le support de roue/le bras oscillant longitudinal (4, 5, 6, 7).

2. Suspension de roue indépendante selon la revendication 1, **caractérisée en ce que** le point d'articulation (22, 27) du ressort à lame (20, 25) sur le support de roue/le bras oscillant longitudinal (4, 5, 6, 7) est plus bas que le point d'articulation (14, 16) du bras oscillant transversal (12, 13).

3. Suspension de roue indépendante selon la revendication 1, **caractérisée en ce que** le ressort à lame (20, 25) d'une roue est plus long que la moitié de l'écartement des roues de l'essieu et s'étend à travers le plan médian longitudinal de l'autre côté du véhicule et est connecté (30) dans le plan médian longitudinal au ressort à lame (25, 20) de l'autre roue du même essieu.

4. Suspension de roue indépendante selon la revendication 3, **caractérisée en ce que** le ressort à lame (20, 25) forme avec la direction transversale du véhicule (direction y) un angle (29) en vue de dessus.

5. Suspension de roue indépendante selon la revendication 1, **caractérisée en ce que** les ressorts à lame (20, 25) sont connectés l'un à l'autre dans le plan médian longitudinal du véhicule automobile par une manille (30).

6. Suspension de roue indépendante selon la revendication 1, **caractérisée en ce que** le ressort à lame (20, 25) se compose de plastique.
